# EUROPEAN PATENT APPLICATION

(11) **EP 4 611 114 A1**
(43) Date of publication of application: **03.09.2025**
(21) Application number: 25160182.9
(22) Date of filing: 26.02.2025
(51) Int. Cl.: H01M 10/42, H01M 50/15, H01M 50/209, H01M 50/531, H01M 50/536, H01M 50/548, H01M 50/55, H01M 50/569, H01M 50/593, H01M 10/48

(54) **BATTERY CORE, BATTERY PACK, AND ELECTRIC DEVICE**

(30) Priority: 29.02.2024 CN 202420413395 U
(71) Applicant: BYD Company Limited, Shenzhen, Guangdong 518118 (CN)
(72) Inventor: ZHANG, Fei, Shenzhen, Guangdong 518118 (CN); MA, Yanyi, Shenzhen, Guangdong 518118 (CN); XING, Wenqing, Shenzhen, Guangdong 518118 (CN); LIU, Meng, Shenzhen, Guangdong 518118 (CN); LIU, Boyan, Shenzhen, Guangdong 518118 (CN)
(74) Representative: Mathys & Squire

(57) **Abstract**

The present disclosure relates to a battery core, a battery pack, and an electric device. The battery core includes a cover plate assembly, a housing, a pole core, a spacer, and a monitoring module. The pole core is fixed in an inner cavity formed by enclosing the cover plate assembly and the housing. The spacer is fixed to a side of the pole core facing the cover plate assembly. The pole core is provided with a tab. The tab passes through the spacer and is fixed to the cover plate assembly. The monitoring module is fixed to the cover plate assembly or the spacer. The monitoring module is electrically connected to the tab to supply power to the monitoring module. In the present disclosure, the monitoring module of the battery core is integrated on the cover plate assembly or the spacer, which improves connection strength between the monitoring module and the battery core, so that the monitoring module has higher reliability. In addition, a power supply line of the monitoring module may be arranged along the cover plate assembly or the spacer, to reduce an impact of an environment on the monitoring module, so that the monitoring module has a better monitoring effect. In addition, a battery core assembly step is simplified, and assembly efficiency of the battery core is improved.

## Description

### FIELD

The present disclosure relates to the field of battery cores, and specifically, to a battery core, a battery pack, and an electric device.

### BACKGROUND

During operation of a battery core, a change of an internal temperature and a gas generation condition of the battery core affect the safety of the battery core. In a related art, a monitoring module is generally arranged in the battery core to monitor an operating status of the battery core.

The monitoring module may additionally be mounted in a housing of the battery core. No mounting position is set in the housing of the battery core, and it is difficult to reliably fix the monitoring module. In addition, because components inside the housing of the battery core are compact with little available space, the arrangement of a power supply line for the monitoring module is difficult, and the operating state of the power supply line is easily affected by environmental conditions, resulting in poor monitoring.

### SUMMARY

In view of the foregoing technical problems, an objective of the present disclosure is to provide a battery core having an integrated monitoring module, a battery pack including the battery core, and a vehicle including the battery core or the battery pack. The specific technical solutions are described as follows.

According to a first aspect, an example of the present disclosure provides a battery core, including a cover plate assembly, a housing, a pole core, a spacer, and a monitoring module. The pole core is fixed in an inner cavity formed by enclosing the cover plate assembly and the housing. The spacer is fixed to a side of the pole core that faces the cover plate assembly. A tab passes through the spacer and is fixed to the cover plate assembly. The monitoring module is fixed to the cover plate assembly or the spacer. The monitoring module is electrically connected to the tab to supply power to the monitoring module.

In the battery core of the present disclosure, the monitoring module is electrically connected to the tab of the pole core to form a loop, so that the pole core supplies power to the monitoring module. The monitoring module is located in the inner cavity of the battery core and is fixed to the cover plate assembly or the spacer, so that the monitoring module monitors performance data of the battery core.

In the present disclosure, the monitoring module of the battery core is integrated on the cover plate assembly or the spacer, which improves connection strength between the monitoring module and the battery core, so that the monitoring module has higher reliability. In addition, a power supply line of the monitoring module may be arranged along the cover plate assembly or the spacer, to reduce the environmental impact on the monitoring module, so that the monitoring module has a better monitoring effect. In addition, because the monitoring module is integrated on the cover plate assembly or the spacer, a battery core assembly step is simplified, and assembly efficiency of the battery core is improved.

In an example, the cover plate assembly includes a main body and a battery post. The battery post is embedded in the main body. The tab passes through the spacer and is electrically connected to the battery post.

In this example, the battery post of the cover plate assembly is electrically connected to the tab of the pole core, so that an electric device can be electrically connected to the pole core through the battery post, to supply power to the electric device.

In an example, the battery core includes a conductive member. An end of the conductive member is electrically connected to the monitoring module, and the other end of the conductive member is welded to the tab, to cause the monitoring module to be electrically connected to the tab.

In an example, the other end of the conductive member is welded to the battery post, and the monitoring module is electrically connected to the tab through the battery post.

In the two examples, the conductive member is electrically connected between the monitoring module and the tab or the battery post, so that the monitoring module is electrically connected to the pole core to implement normal operation of the monitoring module. In addition, an end of the conductive member is welded and fixed to the tab or the battery post, so that the conductive member has higher reliability.

In an example, the monitoring module is fixed to a side of the main body that faces the inner cavity, and the conductive member is fixed to the main body and is welded to the battery post.

In this example, the monitoring module is fixed to a side of the main body of the cover plate assembly that faces the inner cavity, and the conductive member is electrically connected between the battery post and the monitoring module, so that the pole core is conductive to the monitoring module and supplies power to the monitoring module, so as to implement normal operation of the monitoring module.

In an example, an accommodating groove is provided on a side of the main body that faces the inner cavity. The accommodating groove is configured to accommodate and fix the monitoring module and a part of the conductive member.

In this example, the accommodating groove is provided on the main body of the cover plate assembly, and the monitoring module and the part of the conductive member are fixed in the accommodating groove, so that reliability of connection between the monitoring module and the main body of the cover plate assembly and between the conductive member and the main body of the cover plate assembly is improved. In addition, providing the accommodating groove further facilitates positioning of the monitoring module and the conductive member when the monitoring module and the conductive member are mounted.

In an example, the monitoring module is fixed to the spacer. The spacer includes a hollow region. The conductive member passes through the hollow region and is welded to the tab.

In an example, the conductive member is at least partially embedded in the spacer and is welded to the tab.

In the two examples, the monitoring module is fixed to the spacer, and the conductive member passes through the hollow region of the spacer or is embedded in the spacer, and is electrically connected between the tab and the monitoring module, so that the pole core is conductive to the monitoring module and supplies power to the monitoring module, so as to implement normal operation of the monitoring module.

In an example, a fastener is arranged on the spacer, and the monitoring module is snapped into the spacer.

In this example, the spacer and the monitoring module are engaged through a fastener structure, so that the monitoring module is fixed to the spacer.

In an example, the monitoring module includes one or more of a chip, a processor, and an integrated circuit.

In this example, the monitoring module includes one or more of the chip, the processor, and the integrated circuit, so that the monitoring module can monitor and store a performance parameter of the battery core, and can further send the stored parameter to another receiving terminal.

In an example, a quantity of main bodies is two. The two main bodies are arranged on two sides of the pole core. One battery post is arranged on each main body, and one spacer is fixed between each main body and the pole core.

In this example, the battery core includes main bodies of two cover plate assemblies. Battery posts are arranged on the two main bodies and are located on two sides of the pole core. The tab of the pole core respectively passes through different spacers and is electrically connected to different battery posts, so that the battery core can supply power to another device through the battery post.

In an example, the monitoring module is fixed to a side of the pole core. The battery core includes a first side plate and a second side plate. Both the first side plate and the second side plate are connected between two spacers and are respectively located on two opposite sides of the spacers. The conductive member conducts the monitoring module and the battery post located on the other side of the pole core, and the conductive member is at least partially pre-embedded or preset inside the first side plate.

In an example, the conductive member is at least partially pre-embedded or preset inside the first side plate and the second side plate.

In the two examples, the first side plate and the second side plate are arranged between the spacers, the conductive member is at least partially pre-embedded or preset in the first side plate, or the conductive member is at least partially pre-embedded or preset in the first side plate and the second side plate, and the monitoring module is located on a side of the pole core.

An end of the conductive member is electrically connected to the monitoring module, and the other end of the conductive member extends in a direction away from the monitoring module through the first side plate, and is welded to the battery post on the other side of the pole core, or the other end of the conductive member is welded to the battery post on the other side of the pole core through the first side plate and the second side plate, so that the conductive member is conductive to the pole core, to implement normal operation of the monitoring module.

In an example, the battery post includes a guide piece. The guide piece is configured to electrically connect to the tab, and the conductive member is welded to the guide piece and is electrically connected to the tab.

In this example, the guide piece is arranged on an end of the battery post that faces the inner cavity, the battery post is electrically connected to the tab through the guide piece, and an end of the conductive member is welded to the guide piece, so that the monitoring module is conductive to the tab, and the pole core supplies power to the monitoring module, to implement normal operation of the monitoring module.

In an example, the conductive member includes a laser welding part. The laser welding part is fixedly connected to the battery post or the tab, and the monitoring module is electrically connected to the pole core through the laser welding part.

In this example, the conductive member is welded to the battery post or the tab through laser welding to form the laser welding part, so that the conductive member is fixedly connected to the tab or the battery post through the laser welding part. In addition, the monitoring module may be further electrically connected to the tab or the battery post through the laser welding part of the conductive member, so that the pole core supplies power to the monitoring module, to implement normal operation of the monitoring module.

In an example, an inductive conduction band is arranged on the monitoring module, and the inductive conduction band is inserted inside the pole core and is electrically connected to the pole core to monitor performance data of the battery core.

According to a second aspect, an example of the present disclosure further provides a battery pack, including the foregoing battery core and a tray. A plurality of battery cores are arranged in the tray.

According to a third aspect, an example of the present disclosure further provides an electric device, including the foregoing battery core or the foregoing battery pack. The battery core or the battery pack is electrically connected to the electric device to supply power to the electric device.

In the present disclosure, reliability of the battery pack and the electric device is improved due to use of the foregoing battery core, and higher assembly efficiency is also achieved.

### BRIEF DESCRIPTION OF THE DRAWINGS

FIG. 1 is an exploded schematic structural diagram of a battery core according to an example of the present disclosure;
FIG. 2 is a schematic structural diagram of a battery core from a perspective according to an example of the present disclosure;
FIG. 3 is a schematic structural diagram of a battery core from another perspective according to an example of the present disclosure;
FIG. 4 is a schematic structural diagram of a battery core before being mounted according to an example of the present disclosure;
FIG. 5 is a partially enlarged structural view of a battery core before being mounted according to an example of the present disclosure;
FIG. 6 is a schematic partial structural diagram of a battery core from a perspective according to an example of the present disclosure;
FIG. 7 is a schematic partial structural diagram of a battery core from another perspective according to an example of the present disclosure;
FIG. 8 is a schematic partial structural diagram of a battery core according to an example of the present disclosure;
FIG. 9 is a schematic partial structural diagram of a battery core from a perspective according to an example of the present disclosure;
FIG. 10 is a schematic partial structural diagram of a battery core from another perspective according to an example of the present disclosure;
FIG. 11 is a schematic partial structural diagram of a battery core according to an example of the present disclosure;
FIG. 12 is a schematic partial structural diagram of a battery core before being mounted according to an example of the present disclosure;
FIG. 13 is a partially enlarged structural view of a battery core before being mounted according to an example of the present disclosure;
FIG. 14 is a partially enlarged structural view of a battery core before being mounted according to an example of the present disclosure;
FIG. 15 is a partial schematic cross-sectional view of a battery core according to an example of the present disclosure;
FIG. 16 is a partial schematic cross-sectional view of a battery core according to an example of the present disclosure;
FIG. 17 is a schematic structural diagram of a battery core before being mounted according to another example of the present disclosure;
FIG. 18 is a schematic partial structural diagram of a battery core according to another example of the present disclosure;
FIG. 19 is a schematic partial structural diagram of a battery core before being mounted according to another example of the present disclosure;
FIG. 20 is a partially enlarged structural view of a battery core before being mounted according to another example of the present disclosure; and
FIG. 21 is a schematic partial structural diagram of a battery core according to another example of the present disclosure.

In the drawings:
100-battery core; 10-housing; 20-cover plate assembly; 20a-first cover plate assembly; 20b-second cover plate assembly; 21-battery post; 21a-first battery post; 21b-second battery post; 211-guide piece; 211a-first guide piece; 211b-second guide piece; 212a-first groove; 212b-second groove; 22-main body; 22a-first main body; 22b-second main body; 23-cover plate spacer; 23a-first cover plate spacer; 23b-second cover plate spacer; 24-liquid injection port; 25-explosion relief valve; 26a-first slot; 26b-second slot; 30-pole core; 31-tab; 31a-first tab; 31b-second tab; 40-spacer; 40a-first spacer; 40b-second spacer; 50-monitoring module; 60-side plate; 60a-first side plate; 60b-second side plate; 70-conductive member; 71-first conductive member; 71a-second foil sheet; 71b-wire; 71c-first foil sheet; and 72-second conductive member.

### DETAILED DESCRIPTION

To help understand the present disclosure, the following describes the present disclosure more fully with reference to the related accompanying drawings. The accompanying drawings show exemplary implementations of the present disclosure. However, the present disclosure may be implemented in many different forms, and is not limited to the implementations described in this specification. On the contrary, the implementations are provided to make understanding of the disclosed content of the present disclosure more comprehensive.

The following descriptions of various examples are provided to exemplify the specific examples of the present disclosure with reference to accompanying drawings. Numbers of components numbered in this specification, for example, "first" and "second", are merely used for distinguishing the described objects, and do not have any order or technical meaning. However, the terms "connection" and "coupling" described in the present disclosure include direct and indirect connection (coupling) unless otherwise specified. The directional terms mentioned in the present disclosure, for example, "upper", "lower", "front", "back", "left", "right", "inner", "outer", and "side", are merely refer to the directions in the accompanying drawings. Therefore, the used directional terms are intended to better describe and understand the present disclosure more clearly, but are not intended to indicate or imply that the indicated apparatus or element needs to have a particular direction and be constructed and operated in the particular direction, and therefore cannot be understood as a limitation on the present disclosure.

Unless otherwise defined, meanings of all technical and scientific terms used in this specification are the same as those usually understood by a person skilled in the art to which the present disclosure belongs. In the present disclosure, terms used in the specification of the present disclosure are merely intended to describe objectives of the specific examples, but are not intended to limit the present disclosure.

The present disclosure relates to an electric device. The electric device includes an electrically connected battery core or a battery pack. The battery pack includes the battery core and a tray. A plurality of battery cores are arranged in the tray. The battery core or the battery pack is configured to supply power to the electric device.

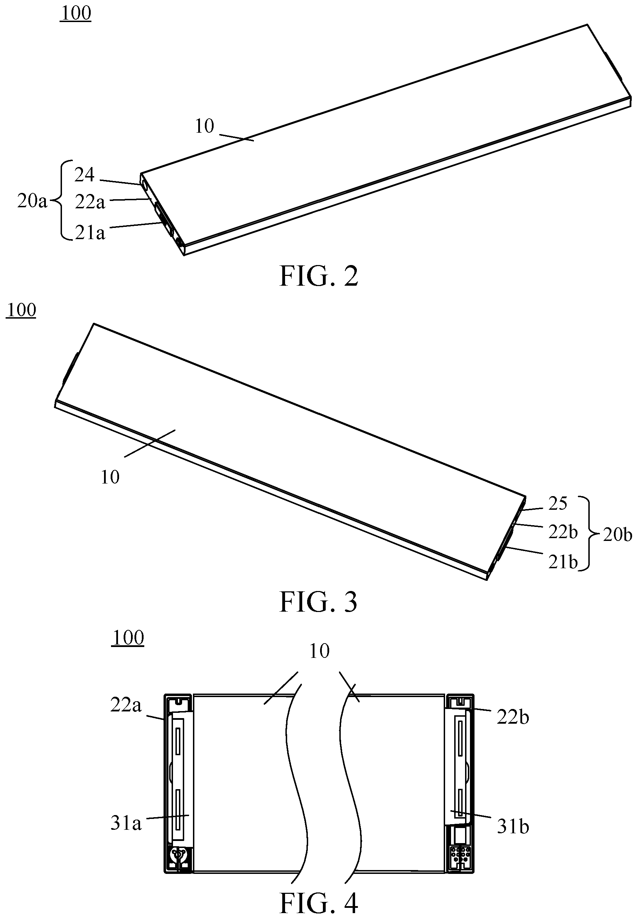

Referring to FIG. 1, FIG. 2, and FIG. 3, FIG. 1 is an exploded schematic structural diagram of a battery core 100 according to an example of the present disclosure. FIG. 2 is a schematic structural diagram of a battery core 100 from a perspective according to an example of the present disclosure. FIG. 3 is a schematic structural diagram of a battery core 100 from another perspective according to an example of the present disclosure.

In the present disclosure, the battery core 100 includes a housing 10, a cover plate assembly 20, a pole core 30, a spacer 40, and a monitoring module 50. The cover plate assembly 20 can cover an opening of the housing 10, so that the housing 10 and the cover plate assembly 20 are enclosed to form an inner cavity for accommodating the pole core 30. The pole core 30 is fixed in the inner cavity. The pole core 30 includes a tab 31. The tab 31 extends toward the cover plate assembly 20. The spacer 40 is arranged on a side of the pole core 30 that faces the cover plate assembly 20. The tab 31 passes through the spacer 40 and is fixedly connected to the cover plate assembly 20. The battery core 100 may be electrically connected to the electric device through the tab 31, and a loop is formed, to meet a power requirement of the electric device.

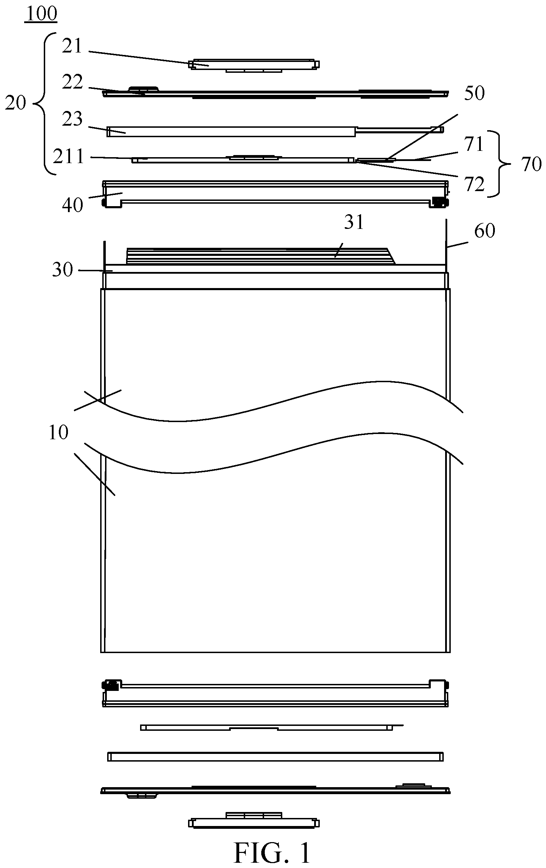

Specifically, in an example, as shown in FIG. 1, the battery core 100 includes two cover plate assemblies 20, two tabs 31, and two spacers 40. Battery posts 21 are respectively arranged on main bodies 22 of the two cover plate assemblies 20, and the cover plate assemblies 20, the tabs 31, and the spacers 40 are respectively arranged on two sides of the pole core 30. Different tabs 31 extend toward different battery posts 21. The tabs 31 pass through the spacers 40 and are electrically connected to the battery posts 21 on the main bodies 22. The pole core 30 is conductive to the battery posts 21 through the tabs 31, so that the battery core 100 can supply power to the electric device through the battery posts 21.

In the present disclosure, the monitoring module 50 is further arranged in the battery core 100. The monitoring module 50 is fixed to the cover plate assembly 20 or the spacer 40. The monitoring module 50 is electrically connected to each of the tabs 31, so that a loop is formed between the monitoring module 50 and the pole core 30, to supply power to the monitoring module 50.

Specifically, in an example, as shown in FIG. 1, the monitoring module 50 is fixed to the cover plate assembly 20. The battery post 21 is arranged on the cover plate assembly 20. A guide piece 211 is arranged on an end of the battery post 21 that faces the inner cavity. The guide piece 211 is electrically connected between the battery post 21 and the tab 31. In addition, a conductive member 70 is further arranged in the battery core 100. An end of the conductive member 70 extends toward the guide piece 211 and is electrically connected to the guide piece 211, and the other end of the conductive member 70 is electrically connected to the monitoring module 50, so that the pole core 30 is conductive to the monitoring module 50 to supply power to the monitoring module 50.

In the present disclosure, the monitoring module 50 is arranged inside the battery core 100. The monitoring module 50 is configured to monitor a performance index of the battery core 100. The monitoring module 50 forms a loop with the pole core 30 through the tab 31, and the battery core 100 supplies power to the monitoring module 50 through the tab 31. The monitoring module 50 may collect and store performance indexes such as gas generation, temperature, and pressure inside the battery core 100, and may further transmit collected performance data of the battery core 100 to another terminal in a wireless manner, and the another terminal analyzes and processes the performance data of the battery core 100.

In the related art, no mounting position of the monitoring module 50 is set in the battery core 100. The monitoring module 50 is difficult to fix in the battery core 100, and connection strength between the monitoring module 50 and the battery core 100 is relatively low. As usage time of the battery core 100 increases, the monitoring module 50 is more likely to fail. In addition, because an internal structure of the battery core 100 is compact and available space is relatively small, it is difficult to mount the monitoring module 50. Both the monitoring module 50 and a power supply line thereof need to be mounted with high accuracy, to ensure that during subsequent mounting of the battery core 100, other components inside the battery core 100 do not interfere with the monitoring module 50 and the power supply line thereof, and the monitoring module 50 and the power supply line thereof are protected and an impact of an environment on the monitoring module 50 is reduced, so that the monitoring module 50 has a better monitoring effect.

In the present disclosure, the monitoring module 50 of the battery core 100 is fixed to the cover plate assembly 20 or the spacer 40. The monitoring module 50 is pre-integrated on the cover plate assembly 20 or the spacer 40. During assembly of the battery core 100, the monitoring module 50 is arranged in the battery core 100 along with mounting of the cover plate assembly 20 or the spacer 40, which simplifies an assembly step of the battery core 100 and reduces mounting difficulty of the monitoring module 50.

In addition, because the tab 31 passes through the spacer 40 and is fixedly connected to the cover plate assembly 20 and the monitoring module 50 is arranged on the cover plate assembly 20 or the spacer 40, a distance between the monitoring module 50 and the tab 31 is closer, and it is more convenient to arrange the power supply line of the monitoring module 50. For example, when the monitoring module 50 is arranged on the cover plate assembly 20, a power supply line between the monitoring module 50 and the battery post 21 may be pre-embedded on the cover plate assembly 20 or pre-embedded inside the cover plate assembly 20. When the monitoring module 50 is arranged on the spacer 40, a power supply line between the monitoring module 50 and the tab 31 may also be pre-embedded on the spacer 40 or pre-embedded inside the spacer 40. The foregoing arrangements reduce mounting difficulty for the power supply line of the monitoring module 50, and allow the power supply line of the monitoring module 50 to achieve higher reliability.

It should be noted that in the present disclosure, the battery core 100 may be used in the electric device or the battery pack, and is used as a power supply component. However, the battery core 100 is not limited to being used in the electric device or the battery pack. The battery core 100 of the present disclosure is also applicable to another electric system to which power needs to be supplied and has higher reliability.

In an example, as shown in FIG. 1, the cover plate assembly 20 includes a battery post 21 and a main body 22. The battery post 21 is embedded in the main body 22, and the tab 31 passes through the spacer 40 and is electrically connected to the battery post 21.

In an example, the tab 31 passes through the spacer 40 and is fixed to an end of the battery post 21 that faces the pole core 30, so that the battery post 21 is electrically connected to the pole core 30 through the tab 31.

In another example, as shown in FIG. 1, the battery post 21 includes a guide piece 211. The guide piece 211 is located on an end of the battery post 21 that faces the pole core 30. The tab 31 is fixedly connected to the guide piece 211 on the battery post 21. In comparison with the cylindrical battery post 21, an area of a contact surface with the guide piece 211 is larger, and the tab 31 is fixed to the guide piece 211, so that connection between the tab 31 and the battery post 21 is more reliable. In addition, a larger contact area can reduce resistance between the tab and the battery post, so that energy loss in a process in which power is conducted to the electric device through the battery post 21 is reduced.

In an example, as shown in FIG. 1, the battery core 100 includes the conductive member 70. An end of the conductive member 70 is electrically connected to the monitoring module 50, and the other end of the conductive member 70 is welded to the battery post 21, so that the monitoring module 50 is electrically connected to the tab 31, to supply power to the monitoring module 50.

In an example, as shown in FIG. 1, the battery post 21 includes the guide piece 211. The battery post 21 is electrically connected to the tab 31 through the guide piece 211. The conductive member 70 is fixed to the cover plate assembly 20 and is welded to the guide piece 211. The conductive member 70 is electrically connected to the tab 31 through the guide piece 211. The guide piece 211 can increase a contact area between the battery post 21 and the conductive member 70, to improve a conductive effect and connection strength between the battery post 21 and the conductive member 70.

In an example, the battery core 100 includes the conductive member 70. An end of the conductive member 70 is electrically connected to the monitoring module 50, and the other end of the conductive member 70 is welded to the tab 31, so that the monitoring module 50 is electrically connected to the tab 31, to supply power to the monitoring module 50.

In an example, the conductive member 70 includes a first conductive member 71 and a second conductive member 72. An end of the first conductive member 71 and an end of the second conductive member 72 are connected to the monitoring module 50, the other end of the first conductive member 71 is connected to the tab 31, and the other end of the second conductive member 72 is connected to the battery post 21. In an example, as shown in FIG. 2 and FIG. 3, the battery core 100 includes two cover plate assemblies 20, which are a first cover plate assembly 20a and a second cover plate assembly 20b respectively. A first battery post 21a and a second battery post 21b are respectively arranged on a first main body 22a of the first cover plate assembly 20a and a second main body 22b of the second cover plate assembly 20b.

In an example, as shown in FIG. 2, a liquid injection port 24 is provided on the first main body 22a. The liquid injection port 24 is in communication with the inner cavity. The liquid injection port 24 is configured to inject an electrolyte into the inner cavity. In another example, the liquid injection port 24 may alternatively be provided on the second main body 22b or the housing 10. A specific position of the liquid injection port 24 may be set according to a position at which liquid is injected into the battery core 100.

In an example, as shown in FIG. 3, an explosion relief valve 25 is arranged on the second main body 22b. The explosion relief valve 25 makes the inner cavity and the outside be in communication with each other. The explosion relief valve 25 may be opened to discharge gas in the inner cavity. Gas is generated during operation of the battery core 100. Excess gas causes pressure in the inner cavity to be excessively large, affecting safety of the battery core 100. In another example, the explosion relief valve 25 may alternatively be arranged on the first main body 22a or the housing 10. A specific position of the explosion relief valve 25 may be set according to a position at which liquid is injected into the battery core 100.

There are two manners of arranging the monitoring module 50 in the battery core 100. In one manner, the monitoring module 50 is fixed to the cover plate assembly 20. In the other manner, the monitoring module 50 is fixed to the spacer 40. In the two manners, the monitoring module 50 may be integrated into the battery core 100, so that an effect in which the monitoring module 50 monitors the battery core 100 is achieved.

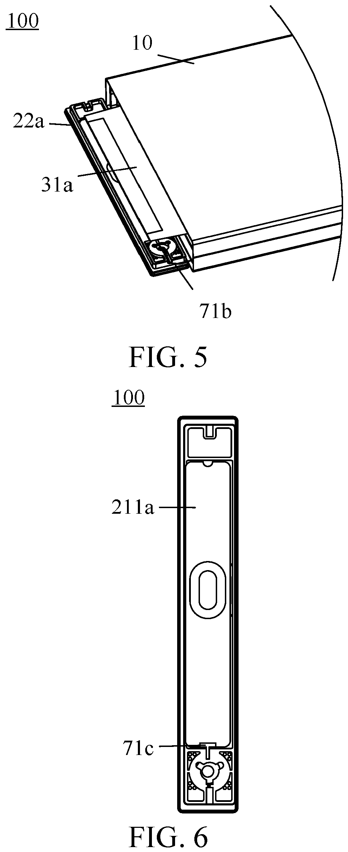

Referring to FIG. 4 and FIG. 5, FIG. 4 is a schematic structural diagram of a battery core 100 before being mounted according to an example of the present disclosure. FIG. 5 is a partially enlarged structural view of a battery core 100 before being mounted according to an example of the present disclosure. In this example, the monitoring module 50 is fixed to the cover plate assembly 20.

Specifically, as shown in FIG. 4 and FIG. 5, the tab 31 includes a first tab 31a and a second tab 31b. The first tab 31a is located on a side of the pole core 30 that faces the first main body 22a and extends toward the first main body 22a. The first tab 31a is fixedly connected to a first guide piece 211a on the first main body 22a. The second tab 31b is located on a side of the pole core 30 that faces the second main body 22b and extends toward the second main body 22b. The second tab 31b is fixedly connected to a second guide piece 211b on the second main body 22b, so that the battery core 100 may be electrically connected to the electric device through the battery post 21.

The monitoring module 50 is arranged on the second main body 22b, the first conductive member 71 is welded to the first battery post 21a, and the second conductive member 72 is welded to the second battery post 21b. The monitoring module 50 is electrically connected to the first battery post 21a through the first conductive member 71, and is electrically connected to the second battery post 21b through the second conductive member 72.

In another example, the monitoring module 50 may alternatively be arranged on the first main body 22a. In some other examples, at least one of the first conductive member 71 or the second conductive member 72 may alternatively be welded to the tab 31, so that the monitoring module 50 can be conductive to the pole core 30.

In an example, as shown in FIG. 4, an accommodating groove is provided on a side of the main body 22 that faces the inner cavity. The accommodating groove is configured to accommodate and fix the monitoring module 50 and a part of the conductive member 70. The accommodating groove improves reliability of connection between the monitoring module 50 and the cover plate assembly 20 and between the conductive member 70 and the cover plate assembly 20, and further facilitates positioning of the monitoring module 50 and the conductive member 70 when the monitoring module 50 and the conductive member 70 are mounted.

In addition, it should be noted that in FIG. 4, the cover plate assembly 20 is not fixedly connected to the housing 10. In this case, the tab 31 is not folded and is in a flat state. In another example, as shown in FIG. 1, the cover plate assembly 20 is fixedly connected to the housing 10. In this case, the tab 31 is in a folded state.

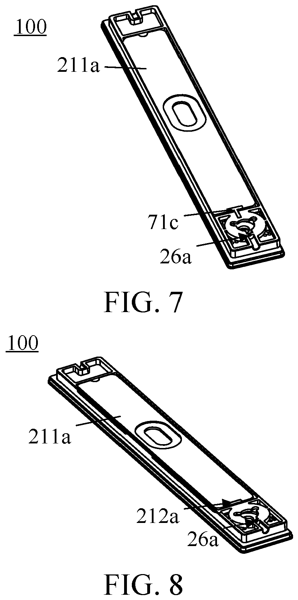

Referring to FIG. 6, FIG. 7, and FIG. 8, FIG. 6 is a schematic partial structural diagram of a battery core 100 from a perspective according to an example of the present disclosure. FIG. 7 is a schematic partial structural diagram of a battery core 100 from another perspective according to an example of the present disclosure. FIG. 8 is a schematic partial structural diagram of a battery core 100 according to an example of the present disclosure.

In an example, a first foil sheet 71c is welded to the first battery post 21a of the first cover plate assembly 20a, so that the first foil sheet 71c is electrically connected to the first battery post 21a. The first foil sheet 71c is a part of the first conductive member 71.

In another example, as shown in FIG. 6 and FIG. 7, the first foil sheet 71c is welded to the first guide piece 211a of the first cover plate assembly 20a, so that the first foil sheet 71c is electrically connected to the first battery post 21a.

In an example, a first groove 212a is provided on the first battery post 21a. The first groove 212a at least partially accommodates the first foil sheet 71c. The first foil sheet 71c is arranged in the first groove 212a, so that reliability of connection between the first foil sheet 71c and the first battery post 21a can be improved, and positioning of the first foil sheet 71c when the first foil sheet 71c is welded to the first battery post 21a is also facilitated.

In another example, as shown in FIG. 8, the first groove 212a may alternatively be provided on the first guide piece 211a.

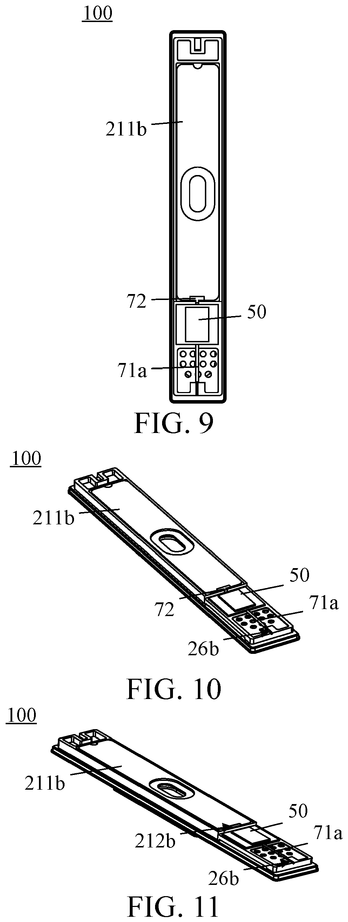

Referring to FIG. 9, FIG. 10, and FIG. 11, FIG. 9 is a schematic partial structural diagram of a battery core 100 from a perspective according to an example of the present disclosure. FIG. 10 is a schematic partial structural diagram of a battery core 100 from another perspective according to an example of the present disclosure. FIG. 11 is a schematic partial structural diagram of a battery core 100 according to an example of the present disclosure.

In an example, the monitoring module 50 is fixed to the second main body 22b. An end of the second conductive member 72 is electrically connected to the monitoring module 50, and the other end of the second conductive member 72 is welded to the second battery post 21b, so that the monitoring module 50 is conductive to the second battery post 21b.

In another example, as shown in FIG. 9 and FIG. 10, the monitoring module 50 is fixed to the second main body 22b. An end of the second conductive member 72 is electrically connected to the monitoring module 50, and the other end of the second conductive member 72 is welded to the second guide piece 211b, so that the monitoring module 50 is conductive to the second battery post 21b.

In an example, a second groove 212b is provided on the second battery post 21b. The second groove 212b at least partially accommodates a second foil sheet 71a. The second foil sheet 71a is arranged in the second groove 212b, so that reliability of connection between the second foil sheet 71a and the second battery post 21b is improved, and positioning of the second foil sheet 71a when the second foil sheet 71a is welded to the second battery post 21b is also facilitated.

In another example, as shown in FIG. 11, the second groove 212b may alternatively be arranged on the second guide piece 211b.

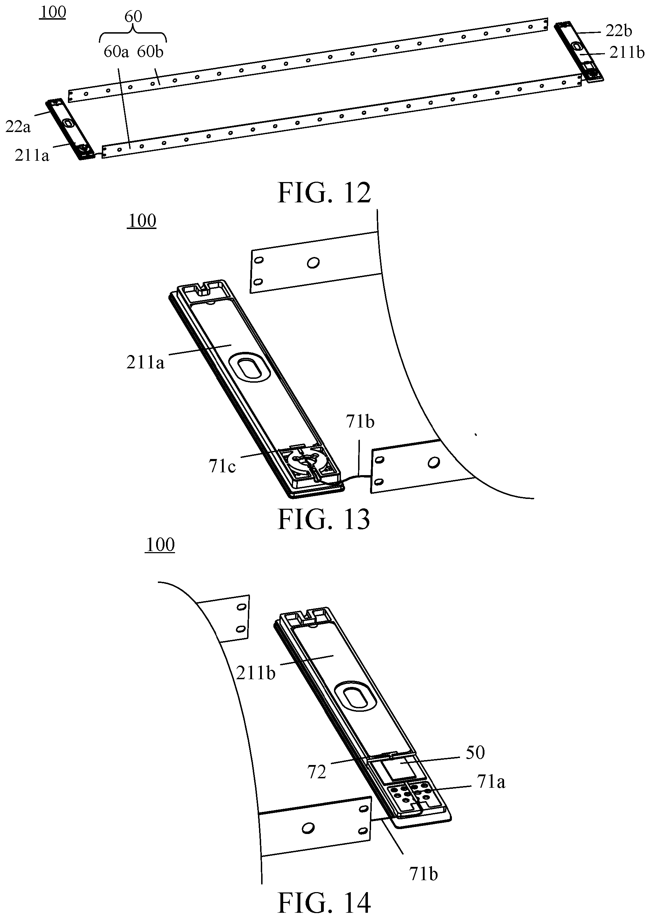

Referring to FIG. 12, FIG. 13, and FIG. 14, FIG. 12 is a schematic partial structural diagram of a battery core 100 before being mounted according to an example of the present disclosure. FIG. 13 is a partially enlarged structural view of a battery core 100 before being mounted according to an example of the present disclosure. FIG. 14 is a partially enlarged structural view of a battery core 100 before being mounted according to an example of the present disclosure.

In an example, the battery core 100 includes a cover plate assembly 20. Two battery posts 21 are arranged on the cover plate assembly 20. The pole core 30 includes two tabs 31. The two tabs 31 are located on a side of the pole core 30 that faces the cover plate assembly 20 and extend toward the cover plate assembly 20. The two tabs 31 are respectively electrically connected to different battery posts 21.

In an example, as shown in FIG. 12, a quantity of cover plate assemblies 20 is two, and the two cover plate assemblies 20 are arranged on two sides of the pole core 30, that is, the first cover plate assembly 20a and the second cover plate assembly 20b are located on two sides of the pole core 30. One spacer 40 is fixed between each cover plate assembly 20 and the pole core 30, that is, a first spacer 40a is arranged between the first cover plate assembly 20a and the pole core 30, and a second spacer 40b is arranged between the second cover plate assembly 20b and the pole core 30.

In an example, the battery core 100 includes a side plate 60. The side plate 60 is connected between the first spacer 40a and the second spacer 40b.

In an example, the side plate 60 includes a first side plate 60a and a second side plate 60b. The first side plate 60a and the second side plate 60b are respectively located on two sides of the pole core 30.

In some examples, the conductive member 70 is at least partially pre-embedded or preset inside the first side plate 60a.

In an example, as shown in FIG. 1, a wire 71b is embedded in the first side plate 60a, and two ends of the wire 71b respectively extend toward the first spacer 40a and the second spacer 40b. The wire 71b is a part of the first conductive member 71.

In this example, the wire 71b is embedded in the first side plate 60a, and the first side plate 60a and the wire 71b are integrated into one component, so that an assembly step of arranging the wire 71b in the inner cavity may be omitted. In addition, when the housing 10 is sleeved, the wire 71b arranged in the first side plate 60 is less likely to come into contact with the housing 10, so that breakage of the wire 71b caused by contact with the housing 10 can be avoided. In addition, displacement of the wire 71b can also be avoided after an electrolyte is injected into the battery core 100.

In another example, the wire 71b may alternatively be embedded in the second side plate 60b to protect the conductive member 70.

In some other examples, the conductive member 70 may alternatively be partially pre-embedded or preset inside the first side plate 60a and the second side plate 60b, so that the conductive member 70 can also be protected.

In an example, there may be multiple first side plates 60a and multiple second side plates 60b. Wires 71b on the multiple first side plates 60a may all enable the monitoring module 50 located on the spacers 40 on two sides of the pole core 30 or the cover plate assembly 20 to be conductive to the pole core 30.

In an example, as shown in FIG. 13, the first main body 22a includes the first foil sheet 71c. The first foil sheet 71c is fixed to a side of the first main body 22a that faces the inner cavity. The first foil sheet 71c is electrically connected to the monitoring module 50 and an end of the wire 71b that faces the first main body 22a.

In an example, as shown in FIG. 14, the second main body 22b includes the second foil sheet 71a. The second foil sheet 71a is fixed to a side of the second main body 22b that faces the inner cavity. An end of the second foil sheet 71a is electrically connected to the monitoring module 50, and the other end of the second foil sheet 71a is welded to an end of the wire 71b that faces the second main body 22b.

In an example, as shown in FIG. 12 to FIG. 14, the first foil sheet 71c, the wire 71b, and the second foil sheet 71a are electrically connected in sequence to form the first conductive member 71. The first conductive member 71 is electrically connected to the monitoring module 50 and the first guide piece 211a of the first battery post 21a.

In some other examples, the first conductive member 71 includes at least one of the first foil sheet 71c, the wire 71b, and the second foil sheet 71a. For example, the first conductive member 71 includes the wire 71b. An end of the wire 71b is electrically connected to the monitoring module 50 and the other end of the wire 71b is welded to the tab 31 or the battery post 21, so that the monitoring module 50 may also be electrically connected to the pole core 30.

In some other examples, the first foil sheet 71c, the wire 71b, and the second foil sheet 71a may be in a shape such as a foil sheet shape or a linear shape for forming an electrical connection.

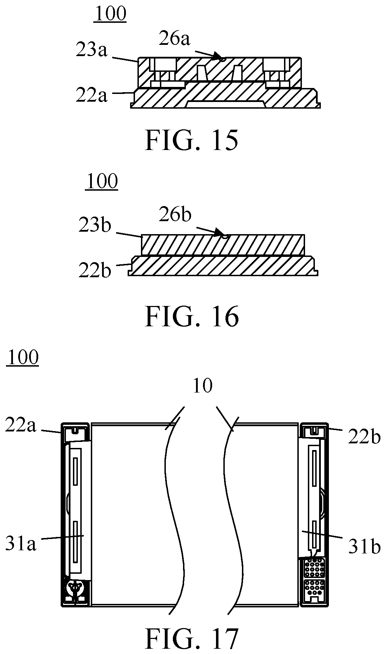

Referring to FIG. 15 and FIG. 16, FIG. 15 is a partial schematic cross-sectional view of a battery core 100 according to an example of the present disclosure. FIG. 16 is a partial schematic cross-sectional view of a battery core 100 according to an example of the present disclosure.

In an example, the cover plate assembly 20 includes a cover plate spacer 23. The cover plate spacer 23 is located on a side of the main body 22 that faces the inner cavity. The cover plate spacer 23 may separate the main body 22 and the pole core 30 in the inner cavity and prevent the pole core 30 from being in direct contact with the main body 22 of the cover plate 20.

In an example, as shown in FIG. 15, a first cover plate spacer 23a is arranged on a side of the first main body 22a that faces the inner cavity. The first cover plate spacer 23a includes a first slot 26a that faces a side of the inner cavity. The first slot 26a may fix and accommodate a part of the wire 71b, so that movement of the wire 71b in the inner cavity is avoided, and breakage of the wire 71b caused by contact between the wire 71b and another component in the battery core 100 is avoided.

In another example, as shown in FIG. 16, a second cover plate spacer 23b is arranged on a side of the second main body 22b that faces the inner cavity. The second cover plate spacer 23b includes a second slot 26b that faces a side of the inner cavity. The second slot 26b may also fix and accommodate a part of the wire 71b, so that movement of the wire 71b in the inner cavity or breakage caused by contact between the wire 71b and another component in the battery core 100 can also be avoided.

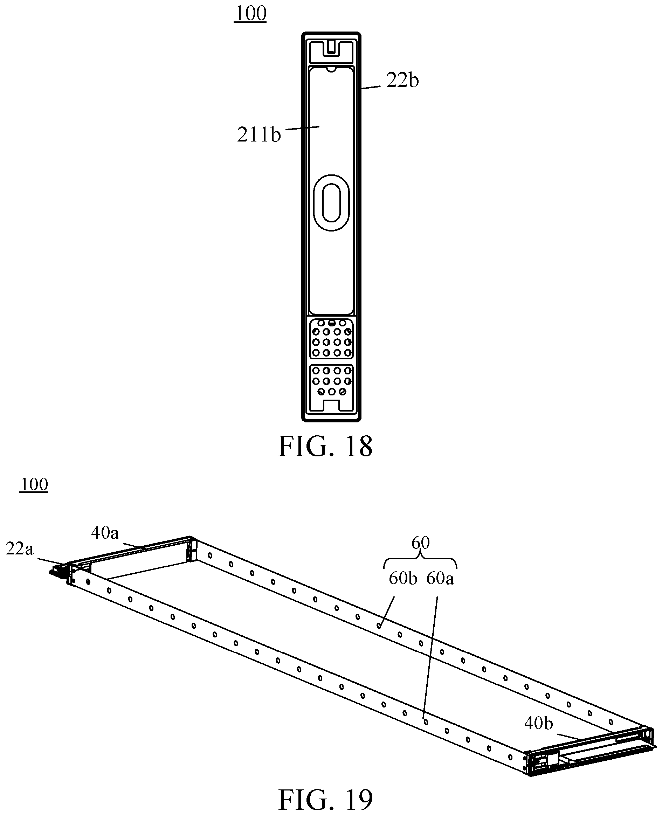

Referring to FIG. 17 and FIG. 18, FIG. 17 is a schematic structural diagram of a battery core 100 before being mounted according to another example of the present disclosure. FIG. 18 is a schematic partial structural diagram of a battery core 100 according to another example of the present disclosure. In this example, the monitoring module 50 is fixed to the spacer 40.

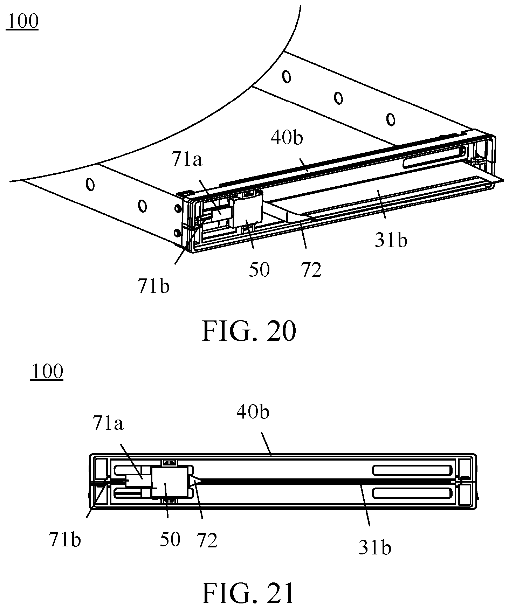

Specifically, as shown in FIG. 17, the tab 31 includes the first tab 31a and the second tab 31b. The first tab 31a and the second tab 31b pass through the first spacer 40a and the second spacer 40b respectively and are electrically connected to the first battery post 21a and the second battery post 21b respectively. Referring to FIG. 19, FIG. 20, and FIG. 21, FIG. 19 is a schematic partial structural diagram of a battery core 100 before being mounted according to another example of the present disclosure. FIG. 20 is a partially enlarged structural view of a battery core 100 before being mounted according to another example of the present disclosure. FIG. 21 is a schematic partial structural diagram of a battery core 100 according to another example of the present disclosure.

In an example, the spacer 40 includes a hollow region. An end of the conductive member 70 passes through the hollow region and is welded to the tab 31, and the other end of the conductive member 70 is electrically connected to the monitoring module 50, so that the monitoring module 50 is conductive to the pole core 30.

In another example, the conductive member 70 is embedded in the spacer 40, an end of the conductive member 70 is welded to the tab 31, and the other end of the conductive member 70 is electrically connected to the monitoring module 50, so that the monitoring module 50 is conductive to the pole core 30.

In an example, as shown in FIG. 19, the monitoring module 50 is fixed to the second spacer 40b, the first conductive member 71 is welded to the first battery post 21a, and the second conductive member 72 is welded to the second tab 31b. The monitoring module 50 is electrically connected to the first battery post 21a through the first conductive member 71, and is electrically connected to the second tab 31b through the second conductive member 72.

In another example, the monitoring module 50 may alternatively be fixed to the first spacer 40a.

In another example, both the first conductive member 71 and the second conductive member 72 may be welded to the tab 31 or welded to the battery post 21, so that the monitoring module 50 may also be conductive to the pole core 30.

In the foregoing specific examples, the monitoring module 50 is conductive to the pole core 30 by using multiple methods for arranging the conductive member 70, to implement normal operation of the monitoring module 50.

In an example, a fastener is arranged on the spacer 40, and the monitoring module 50 is snapped into the spacer 40.

In an example, as shown in FIG. 20 and FIG. 21, a female fastener of the fastener is arranged on the second spacer 40b, and a child fastener of the fastener is arranged on the monitoring module 50. The monitoring module 50 fits with the second spacer 40b, so that the monitoring module 50 is fixed to the second spacer 40b.

In another example, the female fastener of the fastener may be arranged on the monitoring module 50, and the child fastener of the fastener may be arranged on the second spacer 40b.

In an example, the monitoring module 50 includes an encapsulation body. The monitoring module 50 is encapsulated in the encapsulation body, and the encapsulation body at least partially wraps the monitoring module 50. A fastener structure is arranged on the encapsulation body, and the monitoring module 50 is fixedly connected to the spacer 40 through the fastener structure of the encapsulation body.

In an example, as shown in FIG. 20 and FIG. 21, an end of the second conductive member 72 is electrically connected to the monitoring module 50, and the other end of the second conductive member 72 passes through the hollow region of the second spacer 40b and is welded to the second tab 31b, so that the monitoring module 50 is electrically connected to the second tab 31b.

In an example, as shown in FIG. 20 and FIG. 21, the second foil sheet 71a is fixed to the second spacer 40b. An end of the second foil sheet 71a is welded to the wire 71b, and the other end of the second foil sheet 71a is electrically connected to the monitoring module 50. The wire 71b is electrically connected to the first guide piece 211a through the first foil sheet 71c of the first cover plate assembly 20a, so that the monitoring module 50 is electrically connected to the first battery post 21a, and then the monitoring module 50 is conductive to the pole core 30.

In the specific descriptions of the foregoing examples, the monitoring module 50 may be conductive to the pole core 30. The battery core 100 may further provide power to the monitoring module 50 during operation, to ensure normal operation of the monitoring module 50.

In an example, an inductive conduction band is arranged on the monitoring module 50. The inductive conduction band is inserted into the pole core 30 and is electrically connected to the pole core 30. The monitoring module may obtain data of the pole core 30 through the inductive conduction band, and then monitor performance data of the battery core 100.

In some examples, the monitoring module 50 includes one or more of a chip, a processor, and an integrated circuit, so that the monitoring module 50 can monitor and store a performance parameter of the battery core 100, and can further send the stored parameter to another receiving terminal.

In an example, there are multiple monitoring modules 50. The multiple monitoring modules 50 may be all arranged on the cover plate assembly 20 or the spacer 40, or a specific quantity of monitoring modules 50 may be arranged on the cover plate assembly 20 and a specific quantity of monitoring modules 50 may be arranged on the spacer 40.

In an example, the first battery post 21a and the first foil sheet 71c, the first foil sheet 71c and the wire 71b, the wire 71b and the second foil sheet 71a, the second conductive member 72 and the second battery post 21b, or the second conductive member 72 and the second tab 31b are all welded to fix the two components.

In a preferred example, the components inside the battery core 100 are welded through ultrasonic welding. The components of the battery core 100 are usually soldered through tin soldering. Due to the presence of an electrolyte in the inner cavity, a corrosion resistant adhesive needs to be arranged outside a tin soldering joint to protect the tin soldering joint, and curing of the corrosion resistant adhesive requires a long time. This increases assembly steps of the battery core 100 and extends assembly time thereof. Ultrasonic welding can shorten the assembly time of the battery core 100.

In an example, the conductive member 70 includes a laser welding part, and the laser welding part is fixedly connected to the battery post 21 or the tab 31, so that the monitoring module 50 is electrically connected to the pole core 30 through the laser welding part. In this example, the components inside the battery core 100 are welded through laser welding. In a preferred example, the battery post 21 is welded to the main body 22. In a process of welding the battery post 21, the conductive member 70 may be simultaneously welded. For example, in a process of welding the first battery post 21a to the first main body 22a, the first foil sheet 71c may also be simultaneously welded to the first guide piece 211a of the first battery post 21a. In a process of welding the second battery post 21b to the second main body 22b, the second conductive member 72 may also be simultaneously welded to the second guide piece 211b of the second battery post 21b. This operation can reduce a risk of damage to the monitoring module 50 and the conductive member 70 during transportation and assembly.

In a preferred example, the battery core 100 includes tabs 31 that are used as a positive electrode and a negative electrode and battery posts 21 that are used as a positive electrode and a negative electrode. Materials of the tab 31 and the battery post 21 that are used as the positive electrodes are aluminum, and materials of the tab 31 and the battery post 21 that are used as the negative electrodes are nickel-plated copper.

In a preferred example, the conductive member 70 is welded to the tabs 31 that are used as the positive electrode and the negative electrode or the battery posts 21 that are used the positive electrode and the negative electrode. When the conductive member 70 is welded to the tab 31 or the battery post 21 that is used as the positive electrode, a material of the conductive member 70 is the same as that of the tab 31 or the battery post 21 that is used as the positive electrode. When the conductive member 70 is welded to the tab 31 or the battery post 21 that is used as the negative electrode, a material of the conductive member 70 is the same as that of the tab 31 or the battery post 21 that is used as the negative electrode.

In a preferred example, the material of the conductive member 70 welded to the positive electrode is aluminum, and the material of the conductive member 70 welded to the negative electrode is nickel-plated copper.

In the descriptions of this specification, descriptions of reference terms such as "one implementation", "some implementations", "exemplary implementation", "example", "specific example" or "some examples" mean that specific characteristics, structures, materials, or features described with reference to the implementation or example are included in at least one implementation or example of the present disclosure. In this specification, schematic descriptions of the foregoing terms are not necessarily with respect to the same implementation or example. In addition, the described specific characteristics, structures, materials, or features may be combined in a proper manner in any one or more implementations or examples.

## Claims

1. A battery core, comprising: a cover plate assembly, a housing, a pole core, a spacer, and a monitoring module, the pole core being fixed in an inner cavity formed by enclosing the cover plate assembly and the housing, the spacer being fixed to a side of the pole core that faces the cover plate assembly, the pole core being provided with a tab, the tab passing through the spacer and being fixed to the cover plate assembly, the monitoring module being fixed to the cover plate assembly or the spacer, and the monitoring module being electrically connected to the tab to supply power to the monitoring module.

2. The battery core according to claim 1, wherein the cover plate assembly comprises a main body and a battery post, the battery post is embedded in the main body, and the tab passes through the spacer and is electrically connected to the battery post.

3. The battery core according to claim 2, comprising a conductive member, an end of the conductive member being electrically connected to the monitoring module, and the other end of the conductive member being welded to the tab, to cause the monitoring module to be electrically connected to the tab; and/or
the other end of the conductive member being welded to the battery post, to cause the monitoring module to be electrically connected to the tab through the battery post.

4. The battery core according to claim 3, wherein the monitoring module is fixed to a side of the main body that faces the inner cavity, and the conductive member is fixed to the main body and is welded to the battery post.

5. The battery core according to claim 4, wherein an accommodating groove is provided on a side of the main body that faces the inner cavity, and the accommodating groove is configured to accommodate and fix the monitoring module and a part of the conductive member.

6. The battery core according to claim 3, wherein the monitoring module is fixed to the spacer, the spacer comprises a hollow region, and the conductive member passes through the hollow region and is welded to the tab; and/or
the conductive member is at least partially embedded in the spacer and is welded to the tab.

7. The battery core according to claim 6, wherein a fastener is arranged on the spacer, and the monitoring module is snapped into the spacer.

8. The battery core according to any one of claims 1 to 7, wherein the monitoring module comprises one or more of a chip, a processor, and an integrated circuit.

9. The battery core according to any one of claims 3 to 7, wherein a quantity of main bodies is two, the two main bodies are respectively located on two opposite sides of the pole core, one battery post being arranged on each main body, and one spacer being fixed between each main body and the pole core.

10. The battery core according to claim 9, wherein the monitoring module is fixed to a side of the pole core, the battery core comprises a first side plate and a second side plate, both the first side plate and the second side plate are connected between the two spacers and are respectively located on two opposite sides of the spacers, the conductive member conducts the monitoring module and the battery post located on the other side of the pole core, and the conductive member is at least partially pre-embedded or preset inside the first side plate; or
the conductive member is at least partially pre-embedded or preset inside the first side plate and the second side plate.

11. The battery core according to any one of claims 2 to 7, wherein a quantity of main bodies is one, two battery posts are arranged on the main body, and the tabs are all located on a side of the pole core that faces the main body and are electrically connected to the different battery posts respectively.

12. The battery core according to any one of claims 3 to 7, wherein the battery post comprises a guide piece, the guide piece is configured to electrically connect to the tab, and the conductive member is welded to the guide piece to be electrically connected to the tab; or wherein the conductive member comprises a laser welding part, the laser welding part is fixedly connected to the battery post or the tab, and the monitoring module is electrically connected to the pole core through the laser welding part.

13. The battery core according to any one of claims 2 to 7, wherein an inductive conduction band is arranged on the monitoring module, and the inductive conduction band is inserted inside the pole core and is electrically connected to the pole core to monitor performance data of the battery core.

14. A battery pack, comprising the battery core according to claims 1 to 13 and a tray, a plurality of the battery cores being arranged in the tray.

15. An electric device, comprising the battery core according to claims 1 to 13 or the battery pack according to claim 14, the battery core or the battery pack being electrically connected to the electric device to supply power to the electric device.
